# EUROPÄISCHE PATENTANMELDUNG

(11) **EP 0 963 808 A2**
(43) Veröffentlichungstag der Anmeldung: **15.12.1999**
(21) Anmeldenummer: 99117846.8
(22) Anmeldetag: 03.05.1994
(51) Int. Cl.: B23Q 1/01, B23Q 1/38, B23Q 3/06, B23Q 3/08

(54) **Als Werkstückhalter ausgebildeter Maschinentisch zum spanabhebenden Bearbeiten von Werkstücken**

(30) Priorität: 14.09.1993 CH 276693
(62) Teilanmeldung aus: 94810256.1
(71) Anmelder: EDUARD HUBER MANAGEMENT AG, CH-8212 Neuhausen am Rheinfall (CH)
(72) Erfinder: Huber, Eduard, 6301 Zug (CH)

(57) **Zusammenfassung**

Der als Werkstückhalter ausgebildete Maschinentisch zum spanabhebenden Bearbeiten von Werkstücken enthält ein Nutenraster an der Oberseite, eine Kammer, die über Bohrungen mit dem Nutenraster verbunden ist und Mitteln, um die Kammer mit einer Spannmittelquelle zu verbinden. Der Maschinentisch ist ein quaderförmiger Körper aus Naturstein oder Kunststoff. Das Nutenraster, die Kammer und die Durchgangslöcher sind im Körper ausgebildet und eine Lochplatte ist mit einer Mehrzahl von Durchgangslöcher vorgesehen, welche auf der Oberseite des Maschinentisches angeordnet und zur Aufnahme des zu bearbeitenden Werkstückes vorgesehen ist.

Der Arbeitstisch ist sehr schwingungsarm, so dass Werkstücke aus unterschiedlichen Materialien mit hoher Arbeitsgeschwindigkeit bearbeitet werden können.

## Beschreibung

Die Erfindung betrifft einen Maschinentisch für eine Vorrichtung zum Bearbeiten von Werkstücken gemäss dem Oberbegriff des Anspruches 1.

In der DB 38 38 988 ist eine Vakuumspannvorrichtung mit einem Aufspanntisch beschrieben, der auf einem Maschinentisch einer Werkzeugmaschine montiert wird. Der Aufspanntisch weist in der Oberseite ein Nutenraster und eine Kammer auf, die über Bohrungen mit dem Nutenraster verbunden ist. Ferner ist eine Anschlusseinrichtung vorgesehen, um die Kammer mit einer Unterdruckquelle zu verbinden. Es sind Werkstück - Anschlagelemente vorgesehen, welche das Werkstück zusätzlich seitliche abzustützen, um ein Lösen des Werkstückes während der Bearbeitung zu verhindern.

Die Nachteile der Vorrichtung sind darin zu sehen, dass die Vorrichtung kompliziert aufgebaut ist, lediglich mit einer Unterdruckquelle betrieben werden kann und für ein Kältemittel als Spannmittel aufgrund der Vereisung nicht geeignet ist.

Die Erfindung, wie sie in dem unabhängigen Anspruch 1 gekennzeichnet ist, löst die Aufgabe einen Maschinentisch zu schaffen, welche die Nachteile nicht aufweist.

Mit Naturstein und Kunststoff für den Maschinentisch kommen Materialien zur Anwendung, die einen geringen Wärmeausdehnungskoeffizienten aufweisen, so dass ein Vakuum oder ein Kältemittel zum Aufspannen von Werkstücken gleichermassen angewendet werden. Werkstücke unterschiedlichen Materials, wie Metalle, z.B. Leicht- und Buntmetalle, Nichtmetalle, z.B. Kunststoff und Graphit, Naturwerkstoffe, z.B. Holz oder dgl. Lassen sich mit hoher Genauigkeit und hohen Arbeitsgeschwindigkeiten bearbeiten. Die Vorteile der gelochten Platte bestehen in der in der einfachen Handhabung und Anpassung des Aufspannbereichs durch Auflegen einer Platte mit einer anderen Lochanordnung. Mit dem Maschinentisch werden bei allen spanabhebenden Bearbeitungen hohe Abtragsleistungen erreicht und wird z.B. beim Fräsen und schleifen Material mit bis zu dreidimensionalen Konturen und Freiformflächen (Elektroden, Modelbau, usw.)oder dünnwandige Teile mit hoher Vorschubgeschwindigkeit bearbeitet.

Im folgenden wird die Erfindung anhand der beiliegenden Zeichnungen erläutert.

Es zeigen:
- Fig. 1: eine schematisch dargestellte Ansicht einer Vorrichtung zum Bearbeiten von Werkstücken;
- Fig. 2: einen Ausschnitt des Maschinentisches und
- Fig. 3: eine Draufsicht eines Abschnittes der Spannfläche des Maschinentisches.

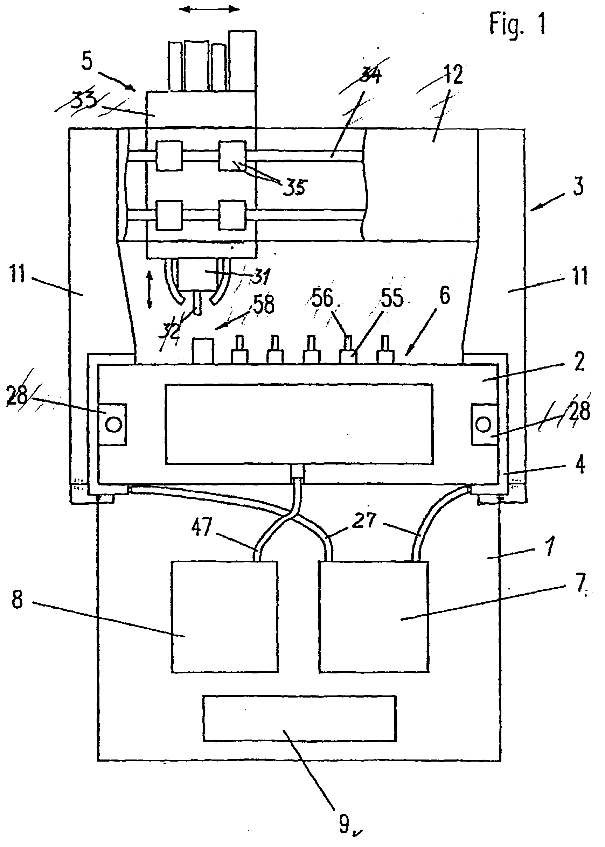

Die Fig.1 zeigt eine Vorrichtung zum spanabhebenden bearbeiten von Werkstücken. Die Vorrichtung weist ein Gestell 1, einen als Werkstückhalter ausgebideten Maschinentisch 2, der auf dem Gestell befestigt ist, einen als Portal ausgebildeten Werkzeugständer 3, eine Lagereinrichtung 4, eine Bearbeitungseinrichtung 5, eine Spanneinrichtung 6, jeweils eine Speisequelle 7 und 8 für die Lagereinrichtung und die Spanneinrichtung sowie eine Steuereinrichtung 9 auf. Der Werkzeugständer 3 in an gegenüberliegenden Seiten am Maschinentisch 2 verschiebbar angeordnet. Der Werkzeugständer hat zwei Säulen 11, in welche die Lagereinrichtung 4 angeordnet ist und einen Träger 12, der aus zwei Platten besteht. Die Lagereinrichtung 4 ist ein Fluidlager mit einem Lagermedium aus Wasser, Oel oder Luft. Die Luftlagereinrichtungen sind über Rohr oder Schlauchleitungen 27 mit der Speisequelle 7 verbunden.

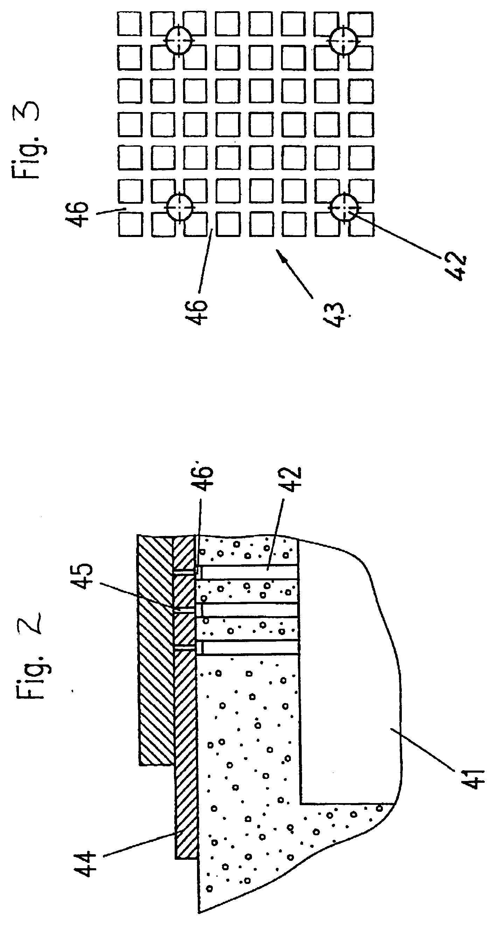

Es wird aus die Figuren 2 und 3 Bezug genommen. Der als Werkstückhalter ausgebildeten Maschinentisch 2 ist ein quaderförmiger Körper aus Naturstein oder Kunststoff. Der Maschinentisch 2 enthält eine Spanneinrichtung, die ein an seiner Oberseite ausgebildetes Nutenraster 43, eine im Maschinentisch ausgebildete Kammer 41, eine Anzahl von Durchgangslöchern 42, welche die Kammer mit dem an der Oberseite des Maschinentisches 2 ausgebildeten Nutenraster 43 verbindet und eine Leitung 47 umfasst, um die Kammer mit der Speisequelle 8 zu verbinden und eine Lochplatte 44 mit Durchgangslöchern 45, welche das Aufspannareal abdeckt. Die Durchgangslöcher 42 sind so angeordnet, dass sie im Schnittpunkt des Rasters 46 ausmünden. Die Durchgangslöcher im Maschinentisch 2 und in der Lochplatte 44 sind im gleichen Raster angeordnet. Wie die Fig. 3 zeigt wird das Aufspannareal 43 durch Rillen 46 gebildet, die rechtwinklig zueinander angeordnet sind. Es wird darauf hingewiesen, dass anstelle der rechtwinklig zueinander angeordneten Rillen die Rillen erfindungsgemäss in einem schiefwinkligem Raster, in Reihen oder kreisförmig angeordnet werden können. Anstelle von Unterdruck kann erfindungsgemäss eine Kältemittel gespeiste Einrichtung angewendet werden, die in den Maschinentisch eingebaut ist.

## Patentansprüche

1. Als Werkstückhalter ausgebildeter Maschinentisch zum spanabhebenden Bearbeiten von Werkstücken, mit einem Nutenraster an der Oberseite, mit einer Kammer, die über Bohrungen mit dem Nutenraster verbunden ist und mit Mitteln, um die Kammer mit einer Spannmittelquelle zu verbinden, dadurch gekennzeichnet, dass der Maschinentisch ein quaderförmiger Körper aus Naturstein oder Kunststoff ist, dass das Nutenraster, die Kammer und die Durchgangslöcher im Körper ausgebildet sind und dass eine Lochplatte mit einer Mehrzahl von Durchgangslöcher vorgesehen ist, welche auf der Oberseite des Maschinentisches angeordnet und zur Aufnahme des zu bearbeitenden Werkstückes vorgesehen ist.

2. Maschinentisch nach Anspruch 1, dadurch gekennzeichnet, dass die Spannmittelquelle (8) eine Unterdruckquelle ist.

3. Maschinentisch nach Anspruch 1, dadurch gekennzeichnet, dass die Spannmittelquelle eine mit Kältemittel betriebene Einrichtung ist.

4. Maschinentisch nach Anspruch 1, dadurch gekennzeichnet dass die Durchgangslöcher (42,45) im Maschinentisch und in der Lochplatte im gleichen Raster angeordnet sind, wobei die Anzahl der Durchgangslöcher im Maschinentisch und in der Lochplatte gleich oder unterschiedlich ist..
